# EUROPÄISCHE PATENTSCHRIFT

(11) **EP 1 044 598 B1**
(45) Veröffentlichungstag und Bekanntmachung des Hinweises auf die Patenterteilung: **24.09.2003**
(21) Anmeldenummer: 00108376.5
(22) Anmeldetag: 17.04.2000
(51) Int. Cl.: A01F 12/56

(54) **Antrieb für die Drescheinrichtung an Mähdreschern**
Drive for the threshing device of combines
Entrainement pour le dispositif de battage de moissonneuses-batteuses

(30) Priorität: 16.04.1999 DE 19917171
(43) Veröffentlichungstag der Anmeldung: 18.10.2000
(73) Patentinhaber: Case Harvesting Systems GmbH, 01844 Neustadt (DE)
(72) Erfinder: Knobel, Carsten, 02625 Bautzen (DE); Förster, Michael, 02633 Gaussig (DE); Bauch, Heiko, 02625 Bautzen (DE); Noack, Christian, 02694 Guttau (DE)
(74) Vertreter: Müller, Lutz

(56) Entgegenhaltungen:
- BE-A- 688 540
- US-A- 2 887 892
- US-A- 3 779 251
- US-A- 4 205 508

## Beschreibung

Die Erfindung betrifft eine Drescheinrichtung eines Mähdreschers mit Antrieb für sein im Tangentialfluß arbeitendes Multi-Trommel-Dreschsystem nach den Merkmalen im Oberbegriff des 1. Patentanspruches.

Die Leistungsfähigkeit eines Mähdreschers in Tangentialflußbauart wird maßgeblich von der Leistungsfähigkeit der Drescheinrichtung bestimmt. Deshalb haben sich heute weitestgehend Dreschwerke mit wenigstens drei Trommeln durchgesetzt, die den Drusch in mehreren Schritten durchführen, wodurch höhere Leistungen bei einer schonenden Behandlung des Dreschgutes erreicht werden.

Beim Drusch empfindlicher Erntegüter, wie beispielsweise Körnermais, Erbsen, Bohnen, Sonnenblumen etc., wird die Drehzahl der Dreschtrommel und teilweise auch die der nachgeordneten Trommeln reduziert, so daß genannte Erntegüter schonend ausgedroschen werden. Damit bekommen aber Drescheinrichtungen mit mehreren Trommeln ein Problem, weil durch die Vielzahl der Übergabesteilen zwischen den Trommeln dennoch ein kontinuierlicher und ungehinderter Erntegutfluß gewährleistet sein muß.

Eine derartige Drescheinrichtung besitzen beispielsweise die TX-Mähdrescher der Modelle "TX 62 bis TX 68" von der amerikanischen Firma NEW HOLLAND, die im Prospekt mit dem Druckvermerk "50122/DOO - Printed in Italy - 09/95" vorgestellt sind. Hier ist der Dreschtrommel eine Leittrommel nachgeordnet, deren Hauptfunktion in der Weiterleitung des Dreschgutes an den nachfolgenden Zentrifugalabscheider liegt. Dieser nimmt einen weiteren Ausdrusch vor und übergibt dann das Dreschgut an die Quattrotrommel, die es gezielt auf der ersten Schüttlerstufe ablegt.

Die Antriebsführung ist hier so gestaltet, daß vom Motorabtrieb ein Vorgelege angetrieben wird, auf dem die treibende Scheibe eines Variators angebracht ist. Die angetriebene Variatorscheibe sitzt direkt auf der Welle der Dreschtrommel. Mittels eines Riementriebes mit konstanter Übersetzung wird die der Dreschtrommel nachgeordnete Leittrommel angetrieben. Vom Vorgelege geht ein weiterer Riementrieb zur Separiertrommel, der zur Verwirklichung von zwei unterschiedlichen Drehzahlen für die Separiertrommel auf benachbarte Riemenscheiben mit umgekehrtem Übersetzungsverhältnis umlegbar ist. Ein von der Separiertrommel ausgehender weiterer Riementrieb mit konstantem Übersetzungsverhältnis dient zum Antrieb der Quattrotrommel.

Durch diese Antriebsführung laufen die Dreschtrommel und die Leittrommel mit gleichermaßen veränderten Umfangsgeschwindigkeiten, wenn der Variator verstellt wird. Dagegen ist die Veränderung der Umfangsgeschwindigkeiten der ebenfalls zueinander konstant laufenden Separiertrommel und Quattrotrommel nur in einer Umschaltstufe durch vorstehend beschriebenes Umlegen des Riemens auf die benachbarten Riemenscheiben möglich.

Nachteilig an dieser Antriebsführung ist, daß der Durchfluß des Dreschgutes durch die Drescheinrichtung infolge zu unterschiedlicher Umfangsgeschwindigkeiten der Trommeln nicht optimal ist. Wenn die Separiertrommel und die. Quattrotrommel gegenüber der Dreschtrommel- und Leittrommel zu schnell laufen, entsteht zuviel Kurzstroh und es kommt zu Körnerbruch. Laufen sie dagegen zu langsam, gibt es im hinteren Teil des Dreschwerkes ständig Verstopfungen und die Separiertrommel scheidet das Korn nicht mehr richtig ab. Außerdem ist der Arbeitszeitaufwand für das Umlegen des Riementriebes zwischen dem Vorgelege und der Separiertrommel zu hoch. Diese objektiv vorhandenen Nachteile können durch ungeübte Mähdrescherfahrer noch verstärkt werden, da es keine Möglichkeit zur Vermeidung von Bedienfehlern durch das Umlegen des Riementriebes gibt.

Eine weitere Ausführung eines Multi-Trommel-Systems einer Drescheinrichtung befindet sich im Mähdrescher des Typs "TOPLINER 8 XL" der deutschen Firma DEUTZ-FAHR, die im Sammelprospekt über DEUTZ-FAHR Neuheiten 97/98 mit dem Druckvermerk "91 098 01 Printed in Germany 9709" gezeigt ist. Hier ist der Dreschtrommel eine Leittrommel und dieser eine Separiertrommel nachgeordnet. Die als Verteilertrommel bezeichnete letzte Trommel dieser Drescheinrichtung verteilt das Stroh auf die Schüttler, die breiter als die Drescheinrichtung ausgebildet sind.

Die Antriebsführung dieser Drescheinrichtung.beginnt am Motorabtrieb, von dem aus über einen ersten Riementrieb eine erste Zwischenwelle angetrieben wird und von letzterer aus über einen sogenannten Hauptantrieb-Riemen eine zweite Zwischenwelle. Auf der in Fahrtrichtung gesehenen rechten Seite der zweiten Zwischenwelle befindet sich die treibende Scheibe eines Variators und dessen angetriebene Scheibe ist auf einem Vorgelege befestigt. Von der Vorgelegewelle aus treibt ein Riementrieb gegebenenfalls unter Zwischenschaltung eines Reduziergetriebes die Dreschtrommel an. Auf der linken Seite der Dreschtrommel führt ein Riementrieb mit konstanter Übersetzung zurück zur Leittrommel.

Auf der in Fahrtrichtung gesehenen linken Seite der zweiten Zwischenwelle ist eine zu einem Variatortrieb gehörende Festscheibe angebracht, die über einen Variatorriemen mit einer durchmesserveränderlichen Variatorscheibe in antriebsmäßiger Verbindung steht. Das Verstellen dessen Durchmessers wird über die Veränderung des Verstellweges einer dazugehörenden Spannrolle bewirkt. Die durchmesserveränderliche Variatorscheibe sitzt auf der Welle der Separiertrommel und treibt diese drehzahlveränderlich an. Ebenfalls auf der linken Seite ist die Verteilertrommel mit der Separiertrommel über einen Riementrieb mit konstantem Übersetzungsverhältnis verbunden.

In diesem Antriebskonzept ist damit verwirklicht, daß einmal die Dresch- und Leittrommel separat und im gleichen Maße mit veränderlicher Umfangsgeschwindigkeit angetrieben werden können und zum anderen die Separier- und Verteilertrommel ebenso.

Der Hauptmangel dieses Antriebes für die Drescheinrichtung liegt in seinen hohen Herstellungskosten, da Variatoren sehr kostenintensive Baugruppen sind. Darüber hinaus gibt es aber auch die den Durchfluß des Dreschgutes betreffende Nachteile, wie sie vorstehend bei der zuerst beschriebenen Drescheinrichtung der Firma NEW HOLLAND erläutert wurden. Obwohl theoretisch die Möglichkeit bestünde, die Umfangsgeschwindigkeiten aller Trommeln der Drescheinrichtung zueinander anzupassen, gibt es dafür keine Zwangsmechanismen. Damit obliegt die optimale Anpassung allein dem Geschick des Mähdrescherfahrers, der jedoch aufgrund der Verstellmöglichkeiten der beiden Variatoren noch mehr Fehler machen kann wie bei der NEW HOLLAND-Drescheinrichtung.

Deshalb liegt der Erfindung die Aufgabe zugrunde, eine Drescheinrichtung eines Mähdreschers mit Antrieb für sein im Tangentialfluß arbeitendes Multi-Trommel-Dreschsystem zu schaffen, die über den gesamten Bereich der verschiedenen Umfangsgeschwindigkeiten der Trommeln einen optimalen Durchfluß des Dreschgutes durch die Drescheinrichtung garantiert, wo kein Arbeitszeitaufwand zum Verändern der Umfangsgeschwindigkeiten der Trommeln erforderlich ist, an der Fehleinstellungen für die optimale Umfangsgeschwindigkeit zum Dreschen der verschiedensten Erntegutarten durch den Bediener ausgeschlossen sind und die kostengünstig in der Herstellung ist.

Schließlich soll noch auf eine dritte Ausführungsvariante eines Multi- Trommel-Systems einer Drescheinrichtung eines gezogenen Mähdreschers hauptsächlich zur Ernte von Erdnüssen nach der US-PS 4,205,508 hingewiesen werden, das mit einer unteren Dreschtrommel, einer Zentral- oder Übergabetrommel und einer hinteren Dreschtrommel ausgestattet ist. Diese Trommeln sind durch Kettentriebe in konstanten Übersetzungsverhältnissen antriebsmäßig miteinander verbunden. Sie werden von der mit konstanter Drehzahl rotierenden Zapfwelle eines Zugfahrzeuges über eine Gelenkwelle, eine Querwelle und einen sich daran anschließenden Kettentrieb gemeinsam angetrieben. Die der Drescheinrichtung vorgeschaltete Pick- up erhält ihren Antrieb bei durchschnittlichen Fahrgeschwindigkeiten über einen weiteren Kettentrieb von der unteren Dreschtrommel, wodurch sie ebenso wie genannte Trommeln mit konstanter Umfangsgeschwindigkeit rotiert. Bei höheren Fahrgeschwindigkeiten des Mähdreschers wird dagegen ein von dessen Rad abgeleiteter Riementrieb aktiv, der dann über eine Überholkupplung eine lange Kette antreibt, die über ein Doppelkettenrad mit genanntem Kettentrieb für die Pick- up verbunden ist. Eine an dieser Stelle eingefügte weitere Überholkupplung gestattet es, daß das Doppelkettenrad den Antrieb für die Trommeln der Drescheinrichtung überholen kann.

Der Nachteil dieser Drescheinrichtung ist, daß sie wegen der unveränderbaren Umfangsgeschwindigkeiten ihrer Trommel nur zum Drusch einer speziellen Erntegutart geeignet ist. Außerdem erreicht sie mit nur drei Trommeln keine ausreichende Druschleistung. Damit ist sie zur Erfüllung der Anforderungen an ein moderne und leistungsfähige Drescheinrichtung ungeeignet.

Diese Aufgabe wird gemäß der Erfindung durch die Merkmale des 1. Patentanspruches gelöst, wobei in den Unteransprüchen Merkmale aufgeführt sind, die diese Lösung in vorteilhafter Weise weiterentwickeln.

Durch die antriebsmäßige Verbindung aller Trommeln der Drescheinrichtung in konstanten Übersetzungsverhältnissen stehen deren Umfangsgeschwindigkeiten beim Verändern der Antriebsdrehzahl immer im gleichen Verhältnis zueinander.

Ein geeigneter drehzahlveränderlicher Antriebsmechanismus sorgt dafür, daß alle Trommeln das Dreschgut mit der Umfangsgeschwindigkeit ausdreschen bzw. weiterleiten, die für ein schonendes und vollkommenes Ausdreschen des jeweiligen Dreschgutes notwendig ist.

Obwohl die Erfindung vordergründig an einer Drescheinrichtung mit vier Trommeln erläutert und dargestellt wurde, wird vorsorglich darauf hingewiesen, daß sich der Schutzumfang auch auf Drescheinrichtungen mit mehr als vier Trommeln bei gleicher Antriebsgestaltung bezieht.

Für die Ausbildung des drehzahlveränderlichen Antriebsmechanismus bietet es sich an, einen Variatortrieb einzusetzen, der gegebenenfalls in Kombination mit einem Reduziergetriebe in der Lage ist, alle für die Dreschgüter optimalen Umfangsgeschwindigkeiten bereitzustellen.

Eine bewährte Lösung für die Antriebsführung der Trommeln der Drescheinrichtung besteht darin, die Antriebsleistung in die Dreschtrommel einzuleiten, da diese für den Dreschvorgang allein weit über die Hälfte der für die Drescheinrichtung zur Verfügung stehenden Leistung verbraucht. Zur Weiterleitung der verbleibenden Antriebsleistung an die Leit-, die Separier- und die Strohtrommel hat es sich aufgrund deren geringer Leistungsaufnahme als zweckmäßig erwiesen, die jeweils benachbarten Trommeln der Reihe nach anzutreiben. Das heißt, die Dreschtrommel ist mit der Leittrommel, die Leittrommel mit der Separiertrommel und die Separiertrommel mit der Strohtrommel antriebsmäßig verbunden. Dafür reichen trotz des gemeinsamen Antriebes mehrerer Trommeln bis zum vorletzten Riementrieb einfache Schmalkeilriemensätze aus, da wie bereits erwähnt, die Leistungsaufnahme der der Dreschtrommel nachgeordneten Trommeln selbst in der Summe noch relativ klein ist.

Eine denkbare Ausgestaltung der Erfindung wird auch darin gesehen, wenn in einer gattungsgemäßen Drescheinrichtung der Dreschtrommel ein oder mehrere Trommeln vorgeordnet sind und dort die erfindungsgemäße Antriebsgestaltung realisiert ist. Auch dann wäre es auf jeden Fall zweckmäßig, die gesamte Antriebsleistung in die Dreschtrommel einzuleiten und von da aus auf die weiteren Trommeln zu verteilen.

Zusammenfassend stellen sich die Vorteile der Erfindung so dar, daß durch den erfindungsgemäßen Antrieb für die Drescheinrichtung ein optimaler Durchfluß des Dreschgutes durch die Drescheinrichtung über den gesamten Bereich der verschiedenen Umfangsgeschwindigkeiten gewährleistet ist. Da zum Verändern der Umfangsgeschwindigkeiten der Trommeln lediglich der drehzahlveränderliche Antriebsmechanismus zu betätigen ist, fällt dafür auch kein Arbeitszeitaufwand an. Des weiteren sind auch Bedienungsfehler bei der Veränderung der Umfangsgeschwindigkeiten ausgeschlossen, die zu erhöhten Kurzstrohanteilen, Körnerverlusten oder Verstopfungen führen könnten. Schließlich ist dieser Antrieb durch seine Einfachheit kostengünstig in der Herstellung.

Die Erfindung soll nun anhand eines Ausführungsbeispieles näher erläutert werden, wobei die einzelnen Figuren zeigen:

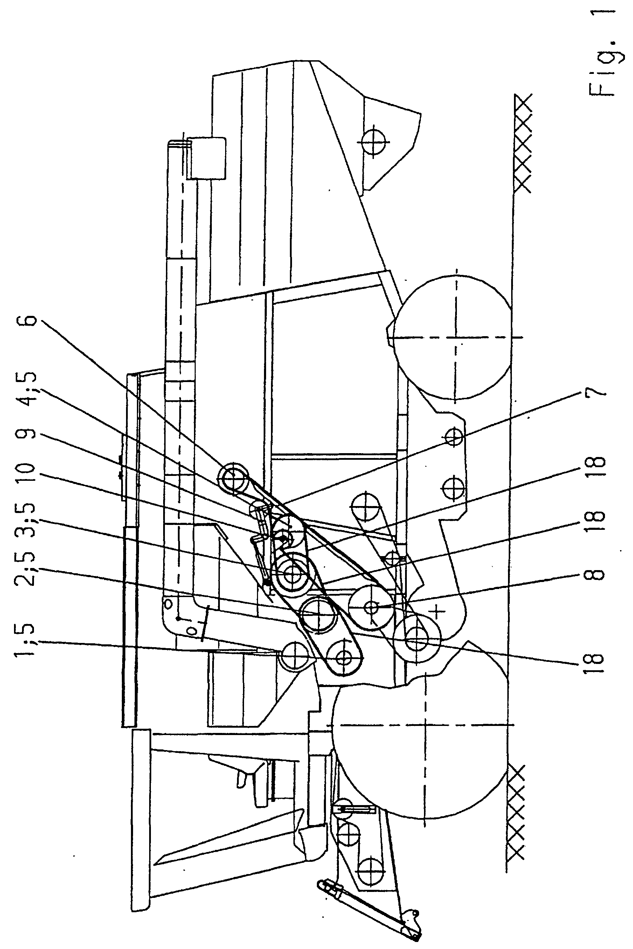

- Fig. 1:: eine Seitenansicht auf die linke Seite eines Mähdreschers mit abgenommener Seitenverkleidung

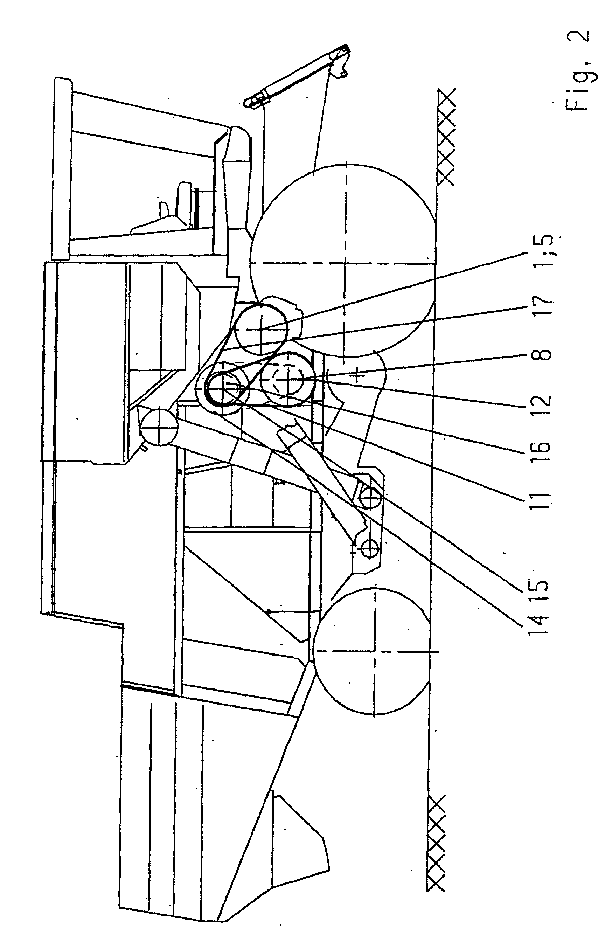

- Fig. 2:: eine Seitenansicht auf die rechte Seite eines Mähdreschers mit abgenommener Seitenverkleidung
- Fig. 3:: eine Draufsicht auf das Antriebsschema eines 4-Trommel-Dreschsystems.

Der Mähdrescher nach diesem Ausführungsbeispiel besitzt ein im Tangentialfluß arbeitendes 4-Trommel-Dreschsystem, das in Flußrichtung des Dreschgutes gesehen eine Dreschtrommel 1, eine Leittrommel 2, eine Separiertrommel 3 und eine Strohtrommel 4 besitzt. Alle Trommeln 5 bewirken zusammen mit den weiteren zur Drescheinrichtung gehörenden Bauteilen einen effektiven und schonenden Ausdrusch verschiedenster Erntegüter, wobei ihre Umfangsgeschwindigkeit über das Antriebssystem auf die Eigenschaften der Erntegüter anpaßbar ist.

Das Antriebssystem ist hier so aufgebaut, daß vom sich auf der linken Seite des Mähdreschers befindenden Motorabtrieb 6 ein Verbundkeilriemen 7 zu einer Zwischenwelle 8 führt, der über eine Riemenkupplung 9 ein- und auskuppelbar ist. Aufgrund seiner beträchtlichen Länge ist in der Nähe der Riemenkupplung 9 eine den Verbundkeilriemen 7 von innen stützende Führungsrolle 10 vorgesehen. Die Zwischenwelle 8 geht quer durch den Mähdrescher hindurch und ihr rechtes Ende dient zur Aufnahme eines drehzahlveränderlichen Antriebsmechanismus 11. Im Ausführungsbeispiel handelt es sich dabei um die Antriebsscheibe 12 eines Variatortriebes 13, dessen Abtriebsscheibe 14 Teil eines am Mähdreschergestell befestigten Vorgeleges 15 ist Von einer drehfest mit der Abtriebsscheibe 14 verbundenen Riemenscheibe 16 führt ein weiterer Verbundkeilriemen 17 direkt zur Dreschtrommel 1. Auf der linken Seite des Mähdreschers befinden sich weitere Schmalkeilriemensätze 18, die die Dreschtrommel 1 mit der Leittrommel 2, die Leittrommel 2 mit der Separiertrommel 3 sowie die Separiertrommel 3 mit der Strohtrommel 4 antriebsmäßig verbinden.

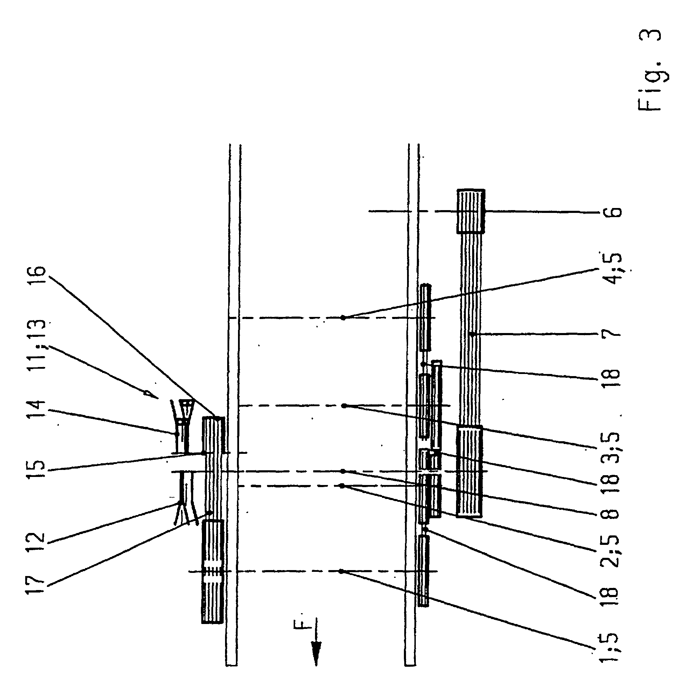

Eine Übersicht des gesamten Antriebsschemas vermittelt Figur 3, worin "F" die Fahrtrichtung des Mähdreschers anzeigt.

### Bezugszeichenaufstellung

- 1: Dreschtrommel
- 2: Leittrommel
- 3: Separiertrommel
- 4: Strohtrommel
- 5: Trommeln
- 6: Motorabtrieb
- 7: Verbundkeilriemen
- 8: Zwischenwelle
- 9: Riemenkupplung
- 10: Führungsrolle
- 11: Antriebsmechanismus
- 12: Antriebsscheibe
- 13: Variatortrieb
- 14: Abtriebsscheibe
- 15: Vorgelege
- 16: Riemenscheibe
- 17: Verbundkeilriemen
- 18: Schmalkeilriemensatz

## Patentansprüche

1. Drescheinrichtung eines Mähdreschers mit Antrieb für sein im Tangentialfluß arbeitendes Multi- Trommel- Dreschsystem, bestehend aus mindestens vier Trommeln, **dadurch gekennzeichnet, daß** alle Trommeln (5) miteinander in konstanten Übersetzungsverhältnissen in antriebsmäßiger Verbindung stehen und daß deren Antrieb über einen drehzahlveränderlichen Antriebsmechanismus (11) erfolgt.

2. Drescheinrichtung nach Anspruch 1, **dadurch gekennzeichnet, daß** der drehzahlveränderliche Antriebsmechanismus (11) als Variatortrieb (13) ausgebildet ist.

3. Drescheinrichtung nach den Ansprüchen 1 und 2, **dadurch gekennzeichnet, daß** der drehzahlveränderliche Antriebsmechanismus (11) mit der Dreschtrommel (1) in antriebsmäßiger Verbindung steht und daß die Leittrommel (2), die Separiertrommel (3) und die Strohtrommel (4) mit der Dreschtrommel (1) antriebsmäßig verbunden sind.

4. Drescheinrichtung nach den Ansprüchen 1 bis 3, **dadurch gekennzeichnet, daß** die jeweils benachbart angeordneten Trommeln (5) miteinander in antriebsmäßiger Verbindung stehen.

5. Drescheinrichtung nach den Ansprüchen 1 bis 4, **dadurch gekennzeichnet, daß** der Motorabtrieb (6) mittels eines Verbundkeilriemens (7) mit Riemenkupplung (9) mit der Antriebsscheibe (12) eines Variatortriebes (13) antriebsverbunden ist und daß dessen Abtriebsscheibe (14) mit der Dreschtrommel (1) in antriebsmäßiger Verbindung steht, wobei anschließend die Dreschtrommel (1) mit der Leittrommel (2), die Leittrommel (2) mit der Separiertrommel (3) und die Separiertrommel (3) mit der Strohtrommel (4) über je einen Schmalkeilriemensatz (18) antriebsverbunden ist.

## Claims

1. A threshing device of a combine harvester with a drive for its multi-drum threshing system working in tangential flow, consisting of at least four drums, **characterised in that** all the drums (5) are connected with each other to be driven with a constant transmission ratio and that their drive takes place via a variable speed driving mechanism (11).

2. A threshing device in accordance with claim 1, **characterised in that** the variable speed driving mechanism (11) is formed as a variable speed drive (13).

3. A threshing device in accordance with claims 1 and 2, **characterised in that** the variable speed driving mechanism (11) is connected with the threshing drum (1) so as to drive it and that the guide drum (2), the separating drum (3) and the straw drum (4) are connected with the threshing drum (1) so as to be driven by it.

4. A threshing device in accordance with claims 1 to 3, **characterised in that** the drums (5) arranged next to each other are connected with each other so as to be driven.

5. A threshing device in accordance with claims 1 to 4, **characterised in that** the pto (6) is connected by means of a composite V-belt (7) with belt coupling (9) with the driving pulley (12) of a variable speed drive (13) and that its driven pulley (14) is connected to the threshing drum (1) so as to drive it, in which the threshing drum (1) is then connected with the guide drum (2), the guide drum (2) with the separating drum (3) and the separating drum (3) with the straw drum (4) each with a narrow V-belt set (18).

## Revendications

1. Dispositif de battage d'une moissonneuse-batteuse avec entraînement pour son système de battage à tambours multiples fonctionnant dans un flux tangentiel, comprenant au moins quatre tambours, **caractérisé en ce que** tous les tambours (5) restent dans des rapports de démultiplication constants les uns avec les autres dans une liaison conforme à l'entraînement et **en ce que** leur entraînement s'effectue via un mécanisme d'entraînement (11) à vitesse variable.

2. Dispositif de battage selon la revendication 1, **caractérisé en ce que** le mécanisme d'entraînement à vitesse variable (11) est conçu comme une commande d'engrenage à vitesse variable (13).

3. Dispositif de battage selon les revendications 1 et 2, **caractérisé en ce que** le mécanisme d'entraînement à vitesse variable (11) est relié conformément à l'entraînement au batteur (1) et **en ce que** le tambour pilote (2), le tambour de séparation (3) et le tambour à paille (4) sont reliés au batteur (1) conformément à l'entraînement.

4. Dispositif de battage selon les revendications 1 à 3, **caractérisé en ce que** les tambours voisins (5) sont en liaison mutuelle, conformément à l'entraînement.

5. Dispositif de battage selon les revendications 1 à 4, **caractérisé en ce que** l'entraînement motorisé (6) est relié à la poulie de commande (12) d'une commande d'engrenage à vitesse variable (13) au moyen d'une courroie trapézoïdale jumelée (7) avec accouplement à courroie (9) et **en ce que** sa poulie menée (14) est en liaison avec le batteur (1) conformément à l'entraînement, le batteur (1) étant ensuite relié par entraînement au tambour pilote (2), le tambour pilote (2) au tambour de séparation (3) et le tambour de séparation (3) au tambour à paille (4) via un ensemble à courroies trapézoïdales étroites (18).
